# EUROPEAN PATENT SPECIFICATION

(11) **EP 1 650 926 B1**
(45) Date of publication and mention of the grant of the patent: **21.05.2008**
(21) Application number: 05109790.5
(22) Date of filing: 20.10.2005
(51) Int. Cl.: H04L 29/06

(54) **Automatically granting root access to administrators, without requiring the root password**
Automatischer Root-Zugang für Verwalter, ohne Notwendigkeit des Root-Passwords
Accès "root" automatique pour administrateurs, sans nécessiter le mot de passe du "root"

(30) Priority: 20.10.2004 US 18614
(43) Date of publication of application: 26.04.2006
(73) Proprietor: Novell, Inc., Provo, Utah 84606-6194 (US)
(72) Inventor: Isaacson, Scott A., Woodland Hills, UT 84653 (US)
(74) Representative: Hanna, Peter William Derek

(56) References cited:
- US-A1- 2003 115 292
- US-A1- 2004 049 697
- ANDREW S. TANENBAUM: "MODERN OPERATING SYSTEMS, 2nd ed." 2001, PRENTICE HALL , UPPER SADDLE RIVER, NJ , XP002371129 * page 753 - page 757 *

## Description

### FIELD OF THE INVENTION

This invention pertains to network login, and more particularly to allowing root access to administrators with each administrator capable of using their own password.

### BACKGROUND OF THE INVENTION

Although letting every user of a personal computer have identical permission is a nice idea, in practice it leads to complications. Users might accidentally (or even intentionally) corrupt the operating system or file system, disrupt other user's files, delete critical files, or otherwise wreak havoc. For this reason, it is desirable that most users be given only limited access to the computer, with full privileges reserved to a limited number of people. In fact, most such systems limit the administrator accounts to one: the account with the username of "root". Where more than one person needs administrator privileges on the machine, they all share the same "root" account.

The more expensive or complex the system, the more important it is to control the number of persons with full administrative privilege to the computer. Thus, in multi-user systems, only a select number of users are granted full privileges: that is, given the password for the "root" account.

It is common nowadays for organizations to have multiple servers, each supporting multiple users. Often, for reasons of simplicity, it is desirable that the administrators of the various servers, at the very least, have some overlap. But this raises a conflict between security and convenience. For convenience, the administrators prefer that all of the machines have the same root password, so that the administrators do not have to memorize several passwords. But this weakens security, because if the password for one machine is compromised, all the machines are compromised. In addition, use of the same password is not even practical where a user is an administrator for one machine but not another: the user can guess that the common password will work with all machines.

This problem is exacerbated when two organizations (different companies or even different divisions within the same company) merge. In all probability, each organization will have a different root password. Thus, to provide the advantage of uniformity in passwords, at least one of the organizations' administrators will have to learn a new password.

A related problem to the above lies in identifying which user was responsible for various modifications. As described above, it is common for there to be exactly one administrator account: the one with the username "root". But if all administrators log in to the administrator account using the same username, the audit trail for the machine will not identify which administrator used the "root" login. To achieve any kind of useful audit trail would require imposing an external utility to prompt the user for a more discriminating identification, and such a system could be easily thwarted.

Andrew S. Tanenbaum: "Modem Operating Systems", 2^{nd} Ed. 2001, Prentice Hall, XP002371129, describes a Unix system in which an administrator can only login to a machine as an administrator using an administrator usemame and password. Each user has a unique user identification (UID). The administrator is considered to be the superuser, and has a UID equal to "0". Any person who wants to act as an administrator of the Unix operating system needs to login using the administrator usemame and password; the administrator usemame might fro example be "admin" or "root". This singular usemame and password has to be shared among all administrators.

US-2004/049697-A1 (Clair et al) describes a login system taking account of the possibility of more than one administrator for a particular machine, and that a user can have rights on different machines. Multiple tables are established, and a user has to be authenticated against all tables, each time a user login is performed, and is accorded the highest level of access for which the user is authenticated. For example, if the user is authenticated as both a standard user and as an administrative user, the user is granted administrative access.

US-2003/115292-A1 (Griffin et al) describes a login system where an administrator can delegate administration privileges. But this allows only one actual administrator: all other users are merely delegates.

Accordingly, a need remains for a way to authenticate administrator users of machines without limiting the administrators to a single username/password combination, and that can provide useful information for an audit trail, to address these and other problems associated with the prior art.

### SUMMARY OF THE INVENTION

The present invention provides a method and apparatus for performing authentication and logging in of users, in accordance with claims which follow. A container hierarchy includes information about users and their access to machines, such as their password, user identification (UID) number, and so on. The container hierarchy also indicates which users are administrators for which machines. When a user logs in to a machine for which the user is an administrator, the user can use his ordinary username and password instead of the root username and root password. That the user is an administrator of the machine can be gleaned from the container hierarchy. The UID for that user can then be set to the designated root UID (e.g., zero (0) for a Linux^{™} system), so that the user is granted root privileges. An audit trail can then also store information about which user logged in at which what time, even if the user is an administrator of the machine.

The foregoing and other features, objects, and advantages of the invention will become more readily apparent from the following detailed description, which proceeds with reference to the accompanying drawings.

### BRIEF DESCRIPTION OF THE DRAWINGS

FIG. 1 shows a machine with administrator privileges connected to a network.
FIG. 2 shows the machine and network of FIG. 1, the network connecting other machines, both server and personal, according to an embodiment of the invention.
FIG. 3 shows components of the machine of FIG. 1, according to an embodiment of the invention.
FIGs. 4A-4C show the container hierarchy of FIG. 3 as used by the machine of FIG. 1 to authenticate administrative and individual users of the machine, according to an embodiment of the invention.
FIGs. 5A-5C show a flowchart of the procedure used by the machine of FIG. 1 to authenticate administrative and individual users of the machine, according to an embodiment of the invention.

### DETAILED DESCRIPTION OF THE PREFERRED EMBODIMENT

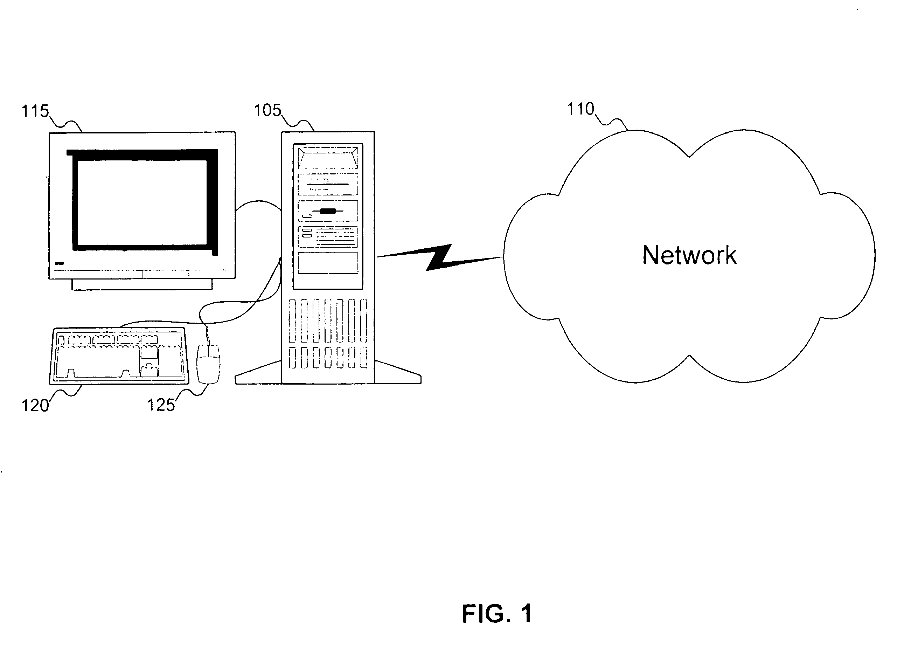

FIG. 1 shows machine 105 administrator privileges connected to network 110. In FIG. 1, machine 105 is shown as including monitor 115, keyboard 120, and mouse 125. A person skilled in the art will recognize that other components can be included with machine 105: for example, other input/output devices, such as a printer. In addition, FIG. 1 does not show some of the conventional internal components of machine 105; for example, a central processing unit, memory, etc. Network 110 permits users to log in to machine 105 from remote locations (not shown in FIG. 1).

Although machine 105 might support remote log in for regular users, administrative users typically have to log in to machine 105 at the machine itself: that is, remote log in is not supported for administrative users. Thus, administrative users need monitor 115 and keyboard 120 (and maybe mouse 125) to be able to log in. This is a common situation with machines running Linux™ operating systems, or Unix-type operating systems. (Although embodiments of the invention are not necessarily limited to machines running variants of Linux, the discussion below will focus on Linux as an operating system for machine 105.) Thus, if machine 105 is configured with a variant of the Linux operating system, machine 105 cannot be administered remotely in the prior art.

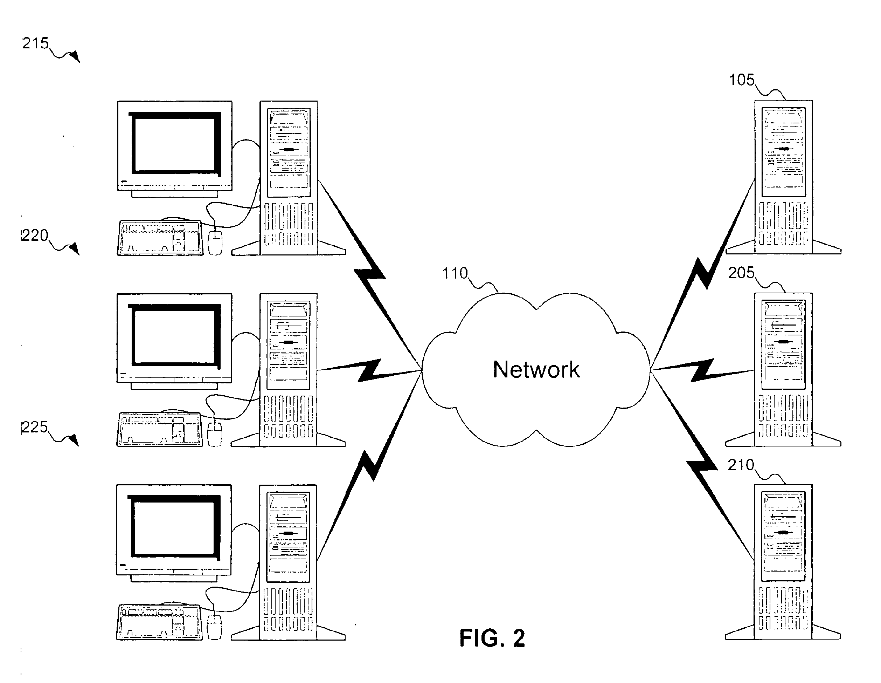

FIG. 2 shows the machine and network of FIG. 1, the network connecting other machines, both server and personal, according to an embodiment of the invention. In FIG. 2, machine 105 is one of several servers. FIG. 2 shows two additional servers 205 and 210, although a person skilled in the art will recognize that there can be any number of servers. In contrast to FIG. 1, machine 105 (and similarly servers 205 and 210) is not shown as including monitor 115, keyboard 120, or mouse 125, but a person skilled in the art will recognize that these (and other components) can be included. The reason machine 105 is shown without monitor 115, keyboard 120, and mouse 125 is because machine 105 (and servers 205 and 210) can be administered remotely, using, for example, computers 215, 220, or 225, across network 110.

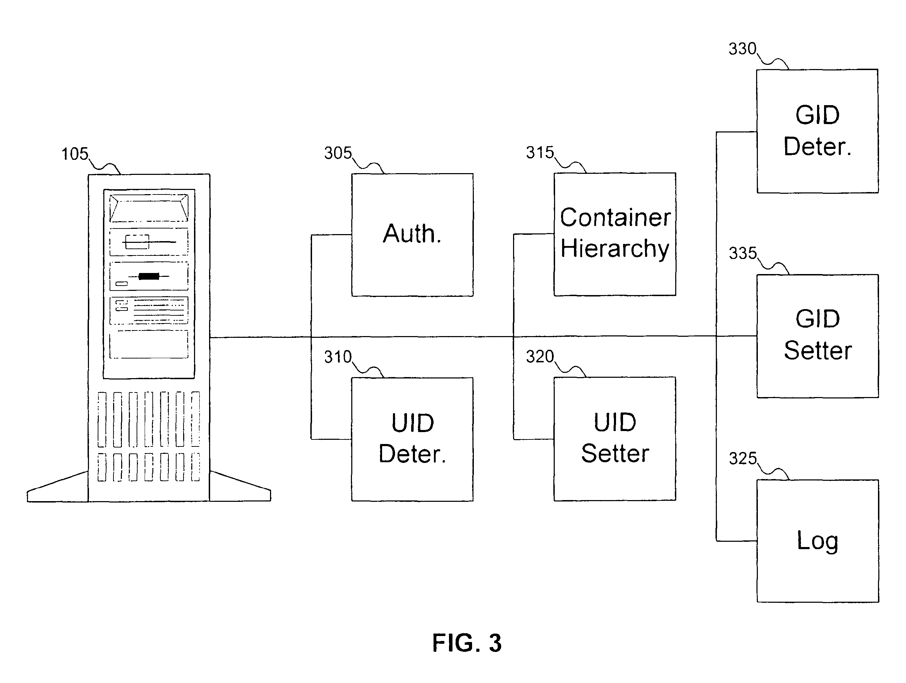

FIG. 3 explains how machine 105 can be administered remotely, as taught in an embodiment of the invention. In FIG. 3, machine 105 is shown as including authenticator 305, UID determiner 310, container hierarchy 315, and UID setter 320. Authenticator 305 is responsible for authenticating the user upon log in. Authenticator 305 can be a standard authentication system, or it can be custom designed to suit the purposes of machine 105. For example, a pluggable authentication module (PAM) can be used to perform authentication of the user. One way authentication is commonly performed is by having the remote server send a challenge to the machine to which the user is logging in. The server and the machine each encode the challenge according to a particular formula that uses the user's password. If the encoded results match, the user is authenticated. (This technique avoids the risk of the user's password being sent across a channel that could be intercepted.) It is worth noting that authenticator 305 simply enables the user to be authenticated to the machine, and might theoretically reside somewhere else within the computing environment: e.g., on another machine. Authenticator 305 is not intended to imply that machine 105 is designed to authenticate users for other machines.

UID determiner 310 is responsible for determining the UID number of the user. In Linux™ systems (and many Unix^{™} systems), a user identification number (UID number) is assigned to each user. The UID numbers are distinct: that is, each user has a different UID number. In addition, the UID number of zero is reserved to the root user (that is, the administrator), but the UID number assigned to administrators can be arbitrarily selected. Each file, directory, and other object on the server, along with changes made to the system, has an associated UID number, which identifies the users that own or have modified the object. Objects do not indicate the user's username, only the UID number.

In prior art systems, the UID number is stored in a specific file on the file system (e.g., /etc/passwd). Thus, after authentication is complete, the prior art system would use this file and the user's username to determine the user's UID number. The system would then set the UID number based on this value.

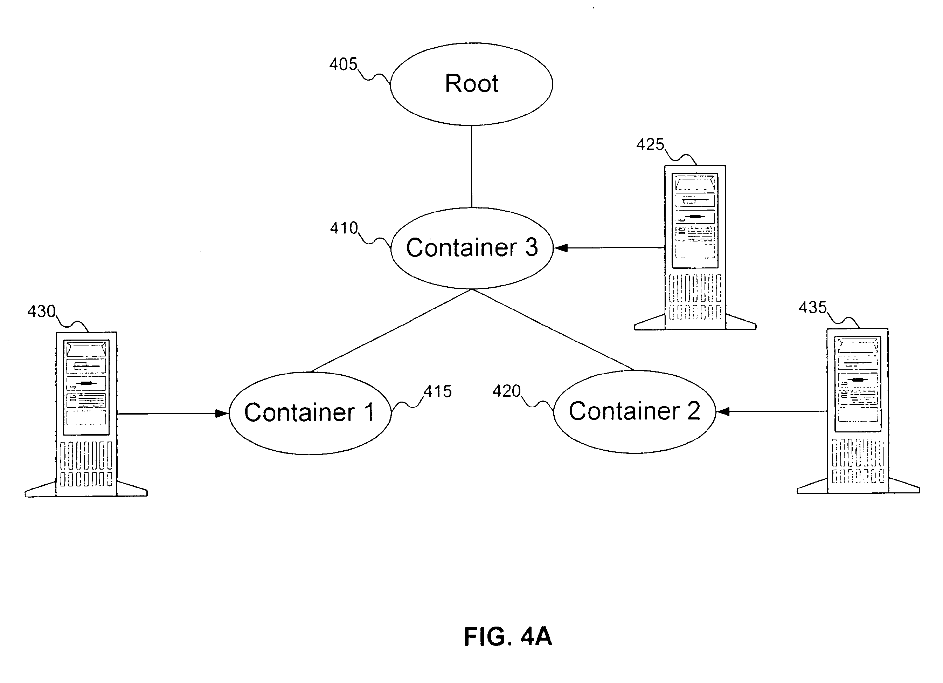

Instead of relying on the specific file, like the /etc/passwd file, to determine the user's UID number, embodiments of the invention determine this information in a different manner. UID determiner 310 determines the user's UID number using container hierarchy 315. The reason for this change from the prior art is that the /etc/passwd file is a static file, which can only associate one UID number with a user, and has no way to designate users as administrative or regular users. In contrast, UID determiner 310 can determine whether a particular user is an administrative user, and can select the appropriate UID number. Thus, for a regular user UID determiner 310 would determine the user's UID number to be the same as would normally be stored in the /etc/passwd file. But for an administrative user, UID determiner 310 would determine the appropriate administrative UID number (e.g., zero). More information about how container hierarchy 315 can store this additional information is provided below with reference to FIGs. 4A-4C. Once UID determiner 310 has determined the appropriate UID number, UID setter 320 sets the UID number for the user accordingly.

A person skilled in the art will immediately recognize the advantages of embodiments of the invention. First, because UID determiner 310 can determine the administrator UID number as appropriate for multiple people, there is no need to share the root username and password. Instead, each user can have their own username and password, but still have administrative privileges on machine 105. This, in turn, implies the advantage that merging networks, companies, or divisions is easy, because there is no need for anyone to learn new passwords.

Another advantage of the embodiments of the invention is that changing who are administrators of a machine is simpler. All that is needed is to change which users are considered administrators within the container hierarchy. For example, removing a user as an administrator does not compromise the existing root password, as each administrator has his own password. Similarly, moving a user from being a regular user to an administrator does not require that the user memorize a new password; his existing password will continue to suffice.

Yet another advantage of embodiments of the invention is that the embodiments enable tracking administrative use of the machine. In the prior art, all administrative users logged in using the root username. Now, administrative users can log in using their standard user name. This name can then be tracked in an audit trail or other log, such as log 325. This variation enables tracking which administrative user made changes to machine 105, something not possible in the prior art.

In a similar manner, GID determiner 330 and GID setter 335 can be used to set group IDs. Group IDs, or GIDs, operate similarly to UIDs, but represent groups of users. The groups can be structured to take advantage of common traits of particular users (e.g., all users that are administrative users), can be based on some organizational convenience (e.g., assigning users to groups as they are added to the system), or any other desired organization.

GIDs provide additional functionality in that users assigned to groups can have access to capabilities that might be denied to users outside the group. For example, in a Linux system, there are three levels of access provided to files. The first level of access exists for the user for his own control. For example, a user can give a particular file an execution property, if the file is executable. Or, the user can remove the write property for a particular file, for example, to prevent accidental change to the file.

The second and third levels of access exists for the group to which the user belongs and for all users, respectively. As with the permissions set for individual files for the user, these levels of access deny or permit other users to access files. For example, a user might grant himself access to both read and write a particular file, grant read-only access to a file to other users in the user's group, and deny all access to other users.

Thus, it should be clear that GIDs can affect the level of access a user has. And just as there is a UID identifying administrative users, there is a GID specifying an administrative group. In Linux systems, the GID for the administrative group is typically zero (0), but a person skilled in the art will recognize that any agreed administrative GID can be used, just as any agreed administrative UID can be used for administrative users.

A person skilled in the art will understand how groups can be used to grant users who are not administrators in their own right partial administrative access. For example, a user might have a UID that is not the administrative UID, but might be a member of the administrative group, and so have the administrative GID. This user would not have complete control over the system, but would have access typically greater than an ordinary user who is not a member of the administrative group.

FIGs. 4A-4B show the container hierarchy of FIG. 3 as used by the machine of FIG. 1 to authenticate administrative and individual users of the machine, according to an embodiment of the invention. In FIG. 4A, container hierarchy 315 is shown as including root 405 and three containers 410, 415, and 420. Each container represents a machine: container 410 represents machine 425, container 415 represents machine 430, and container 420 represents machine 435. That is, when a user is being authenticated for access to a particular machine, the corresponding container is used to determine the user's access level.

A person skilled in the art will recognize that, because container 3 (410) includes containers 1 (415) and 2 (420) within itself, that the objects within those containers are considered to also be within container 3 (410). That is, the containers nest. Thus, while there are no objects directly within container 3 (410), there are still objects considered to be within container 3 (410) for purposes of determining user UIDs and GIDs.

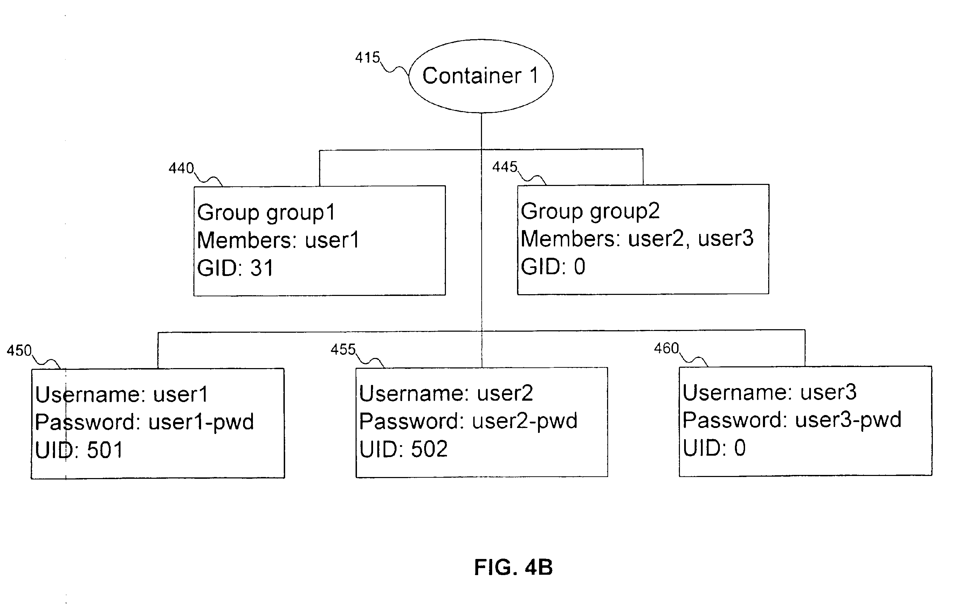

FIG. 4B shows the details of objects within container 1 (415). As shown in FIG. 4B, there are five objects within container 1 (415). Two of these objects are group objects (440 and 445); the other three objects are user objects (450, 455, and 460).

Starting with user object 450, the object specifies the user's login name ("user1"), the user's password ("usr1-pwd"), and the user's UID ("501"). User objects 455 and 460 are similar, for users user2 and user3. Note that user3 has a UID of 0, indicating that user3 is an administrative user for machines associated with or including container 1 415.

Group object 440 identifies a first group of users. Group object 440 specifies the group name ("group1"), the members of the group (just user1, in this case), and the GID ("31"). Similarly, group object 445 specifies the group name ("group2") for the second group, indicates that the members include user2 and user3, and that the GID is 0. This indicates that group2 is a group of administrative users.

Note that user2 has a UID of 502 (that is, not an administrative user UID), but is a member of group group2, with a GID of 0. Thus, user2 is not an administrative user, but is a member of the administrative group. This gives user2 a greater level of access than, say user1, who is neither an administrative user nor a member of an administrative group, but a lesser level of access than user3, who is both an administrative user and a member of the administrative group.

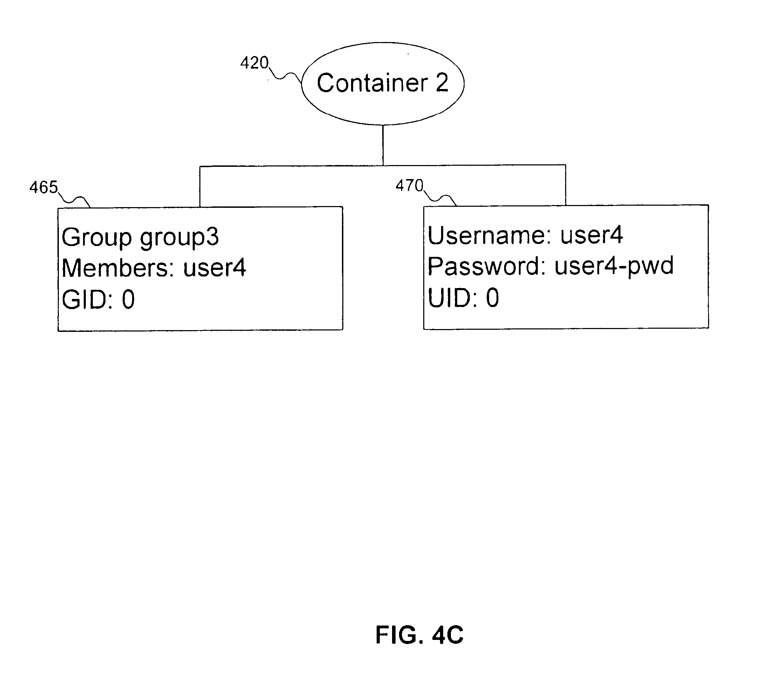

In a similar vein, FIG. 4C shows objects within container 2 420. Container 2 420 includes two objects: group object 465 and user object 470. Group object 465 indicates that group group3 includes just user user4, and that group3 is an administrative group. User object 470 indicates that user user4 is an administrative user for the machine associated with container 2 420. Thus, user user4 has both administrative access as a user and is a member of an administrative group for machines associated with container 2 420.

Although containers 1 (415) and 2 (420) each show only one administrative group, because both containers are nested within container 3 430, container 3 430 includes two administrative groups via nesting. This shows that there can be more than one administrative group in a given container, just as there can be more than one administrative user.

At this point, it should be clear how container hierarchy 315 and UID determiner 310 work together. After the user has been authenticated, UID determiner 310 accesses container hierarchy 315 to determine the user's UID number and whether the container hierarchy indicates that the user is an administrator for the machine in question. If the user is not an administrator for the machine in question, then UID determiner 310 determines the user's UID number as the UID number stored in the user's object associated with the machine in the container hierarchy.

A person skilled in the art will recognize that, while all of the discussion above has centered around administrative users, embodiments of the invention can enable users in general to share access to systems, without having to share accounts. That is, two or more users, each with their own login ID and password, can be assigned the same UID. Then, when either user logs in, they access the same data in the system. Of course, proper file and data sharing can provide similar levels of shared access, but there can be situations in which users in general might want to be able to access the same data and files without simply sharing data and files.

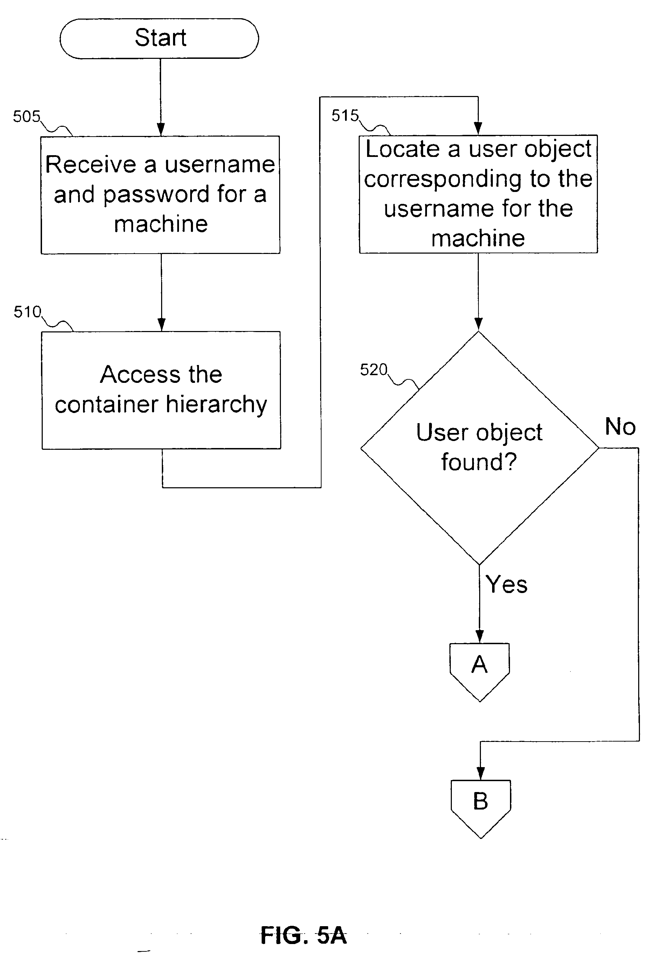

FIGs. 5A-5C show a flowchart of the procedure used by the machine of FIG. 1 to authenticate administrative and individual users of the machine, according to an embodiment of the invention. In FIG. 5A, at step 505, the system receives a username and password for a machine. At step 510, the system accesses the container hierarchy. At step 515, the system attempts to locate an object in the container hierarchy that corresponds to that username and password for that machine. At step 520, the system determines if such an object was found.

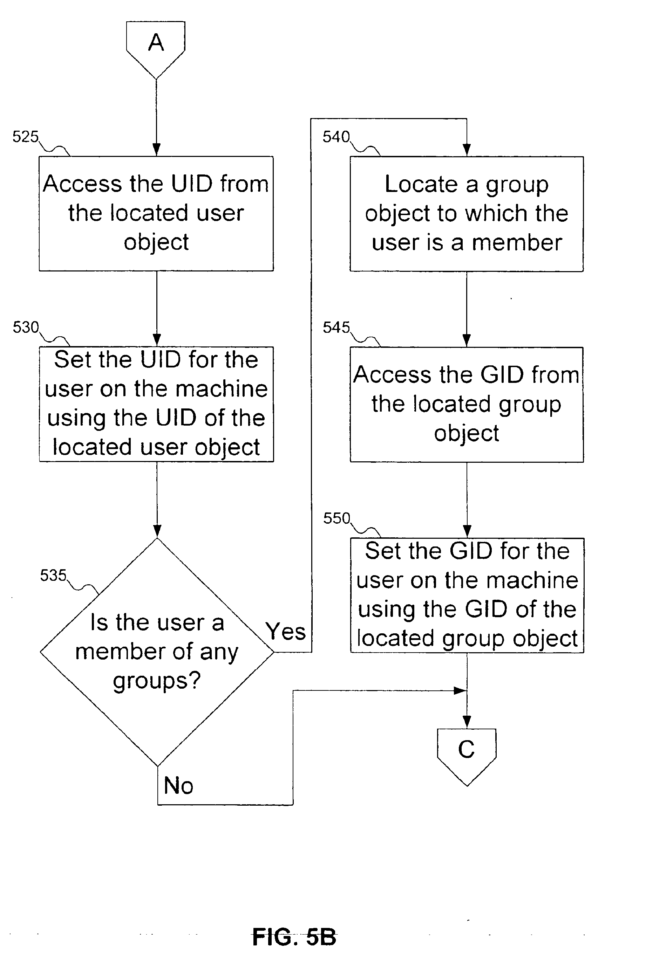

If a user object was found that corresponds to the provided username and password for the machine, then at step 525 (FIG. 5B) the system accesses the UID from the located object. At step 530, the system sets the UID for the user on the machine to the UID accessed from the located object.

At step 535, the system determines if the object is also a member of any groups for the machine. If so, then at step 540, the system locates the group to which the user is a member. At step 545, the system determines the GID for the group on the machine, and at step 550, the system sets the GID for the user on the machine to the GID accessed from the located group object.

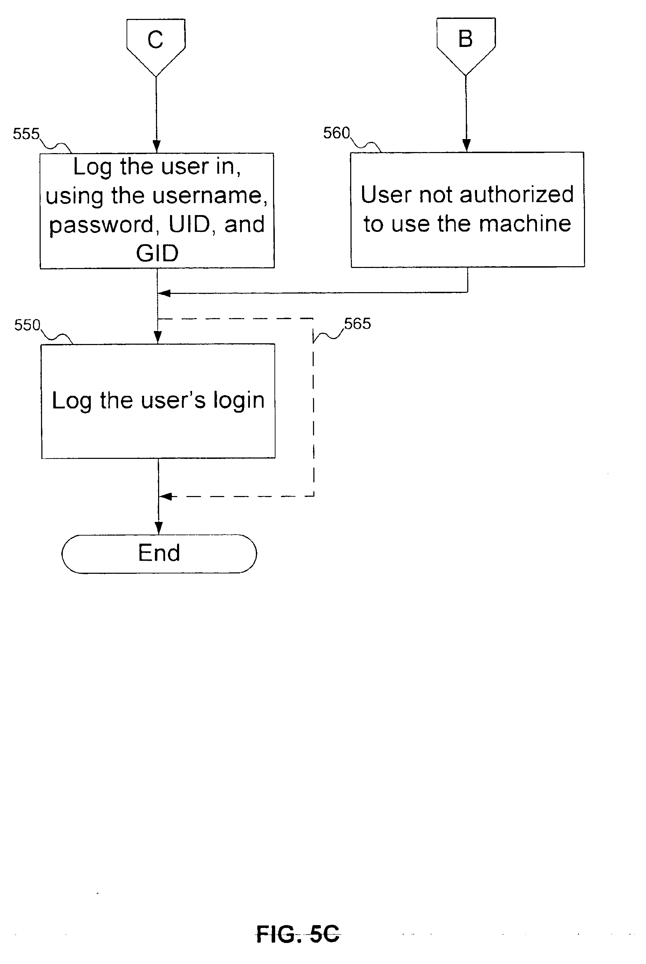

At step 555 (FIG. 5C) the system logs the user into the machine, using the username and password, and using the UID (and GID, if found) accessed from the objects in the container hierarchy. At step 550, the system logs the user's login: e.g., in an audit trail.

Alternatively, if (at step 520 of FIG. 5A) the username and password were not located in an object for the machine, then at step 560, the user is not authorized to log into to the machine. This attempted login is logged at step 550: e.g., in an audit trail.

Step 550 is also optional, in that the login (or attempted login) is not required. In that case, as shown by arrow 565, step 550 can be skipped.

The following discussion is intended to provide a brief, general description of a suitable machine in which certain aspects of the invention may be implemented. Typically, the machine includes a system bus to which is attached processors, memory, e.g., random access memory (RAM), read-only memory (ROM), or other state preserving medium, storage devices, a video interface, and input/output interface ports. The machine may be controlled, at least in part, by input from conventional input devices, such as keyboards, mice, etc., as well as by directives received from another machine, interaction with a virtual reality (VR) environment, biometric feedback, or other input signal. As used herein, the term "machine" is intended to broadly encompass a single machine, or a system of communicatively coupled machines or devices operating together. Exemplary machines include computing devices such as personal computers, workstations, servers, portable computers, handheld devices, telephones, tablets, etc., as well as transportation devices, such as private or public transportation, e.g., automobiles, trains, cabs, etc.

The machine may include embedded controllers, such as programmable or non-programmable logic devices or arrays, Application Specific Integrated Circuits, embedded computers, smart cards, and the like. The machine may utilize one or more connections to one or more remote machines, such as through a network interface, modem, or other communicative coupling. Machines may be interconnected by way of a physical and/or logical network, such as an intranet, the Internet, local area networks, wide area networks, etc. One skilled in the art will appreciated that network communication may utilize various wired and/or wireless short range or long range carriers and protocols, including radio frequency (RF), satellite, microwave, Institute of Electrical and Electronics Engineers (IEEE) 802.11, Bluetooth, optical, infrared, cable, laser, etc.

The invention may be described by reference to or in conjunction with associated data including functions, procedures, data structures, application programs, etc. which when accessed by a machine results in the machine performing tasks or defining abstract data types or low-level hardware contexts. Associated data may be stored in, for example, the volatile and/or non-volatile memory, e.g., RAM, ROM, etc., or in other storage devices and their associated storage media, including hard-drives, floppy-disks, optical storage, tapes, flash memory, memory sticks, digital video disks, biological storage, etc. Associated data may be delivered over transmission environments, including the physical and/or logical network, in the form of packets, serial data, parallel data, propagated signals, etc., and may be used in a compressed or encrypted format. Associa ted data may be used in a distributed environment, and stored locally and/or remotely for machine access.

## Claims

1. Computing apparatus, comprising:
a client or server machine (105,425,430,435) attached to a computer network (110);
an authenticator (305) to authenticate a usemame specific to a user on the machine using a user identification (UID) number, and password for a user of the machine, in order that the user may login to the machine;
a memory in the machine;
a user identification (UID) determiner (310) operative to determine a UID number associated with said user; and
a UID setter (320) operative to set a UID number on the machine to said UID number associated with said user
**characterized in that**
the memory in the machine stores a container hierarchy (315,415) including at least one container (410,415,420) and at least one object (450,455,460) in one of the containers, only one container (415) representing a given machine (430), only one object (460) including a UID number representing a given combination of said usemame and said given machine;
the UID determiner is adapted to determine a UID number associated with said user from said only one object (460), wherein a designated administrator UID number is used as said UID number if it is determined that the user is an administrator of the machine.

2. Apparatus according to claim 1, wherein:
the machine (105,425,430,435) is a Linux^{™} machine; and
said designated administrator UID number is zero.

3. Apparatus according to claim 1, wherein the UID determiner (310) is operative to select said UID number in said only one object as said UID number associated with said only one object (450) if said user is not an administrator of the machine.

4. Apparatus according to claim 1, wherein:
said user is a member of a group associated with the machine,
each group being represented by a group object (440,445) in the container hierarchy, only one group object (440) including a group identification (GID) number for a given combination of said group and said given machine (430); and
the apparatus further comprises:
a group identification (GID) determiner (330) operative to determine a GID number associated with said only one group object (440); and
a GID setter (335) operative to set a GID number on the machine to said GID number associated with said only one group object.

5. Apparatus according to claim 4, wherein the GID determiner (330) is operative to select a designated administrator GID number as said GID number associated with said only one group object (445) if said group is a group of administrators of the machine.

6. Apparatus according to claim 5, wherein the GID determiner (330) is operative to select a GID number in said only one group object (440) as said GID number associated with said only one group object if said group is not a group of administrators of the machine.

7. Apparatus according to claim 1, further comprising a log (325) storing said username.

8. Apparatus according to claim 7, wherein the log (325) stores said username even if the user is an administrator of the machine.

9. A method for a user to log in to a client or server machine (105,425,430,435) attached to a computer network (110), comprising:
receiving (505) from the user a usemame and a password, wherein the usemame is specific to the user;
accessing (510,515,520) an object (450,455,460) in a container hierarchy (315), the container hierarchy including only one container (415) representing a given machine (430), only one object (460) including a user identification (UID) number representing a given combination of said username and said given machine;
determining (525) a UID number associated with the only one object (460);
setting (530) a UID number on the machine for the user to the UID number associated with the only one object; and
authenticating (555,560) the password for the username on the machine using the UID number.

10. A method according to claim 9, wherein determining (525) a UID number associated with the only one object (460) includes:
selecting a designated administrator UID number as the UID number associated with the only one object (460) if the user is an administrator for the machine.

11. A method according to claim 10, wherein:
authenticating (555,560) the password includes authenticating the password for the username on a Linux^{™} machine; and
selecting a designated administrator UID number includes selecting zero as the UID number associated with the only one object (460).

12. A method according to claim 9, wherein determining a UID number associated with the only object includes accessing a UID number from the only one object (450), if the user is not an administrator of the machine.

13. A method according to claim 9, further comprising:
determining (535) that the user is a member of a group, a given combination of said group and said given machine (430) being represented by only one group object (440) in the container hierarchy (415);
determining (545) a group identification (GID) number associated with said only one group object (440); and
setting (550) a GID number on the machine for the user to the GID number associated with said only one group object.

14. A method according to claim 13, wherein determining (545) a GID number associated with said only one group object (445) includes:
determining that the group represents a group of administrator users for the machine; and
selecting a designated administrator GID number as the GID number associated with said only one object.

15. A method according to claim 14, wherein:
authenticating (555,560) the password includes authenticating the password for the username on a Linux^{™} machine; and
selecting a designated administrator GID number includes selecting zero as the GID number associated with the said only one group object (445).

16. A method according to claim 9, further comprising logging (550) the usemame.

17. A method according to claim 16, wherein logging (550) the username includes logging the username even if the user is an administrator of the machine.

18. A computer program which when executing on a computer performs the method of any one of claims 9 to 17.

19. The computer program of claim 18, when stored on a machine-accessible medium.

## Patentansprüche

1. Eine Computer-Apparatur, umfassend:
eine Anwender- oder Server-Maschine (105, 425, 430, 435), angefügt an ein Computer-Netzwerk (110);
einen Authentisierer (305), um einen Nutzer-Namen, der einen Nutzer auf der Maschine spezifiziert, unter Verwendung einer Nutzer-Identifikations-Nummer (UID) und eines Passworts für einen Nutzer auf der Maschine zu authentisieren, so dass der Nutzer auf der Maschine einloggen kann;
einen Speicher in der Maschine;
einen Nutzer-Identifikation (UID) -Bestimmer (310), funktionsfähig, um eine mit dem Nutzer assoziierte UID-Nummer zu bestimmen; und
einen UID-Einsteller (320), funktionsfähig, um eine UID-Nummer auf der Maschine auf die mit dem Nutzer assoziierte UID-Nummer einzustellen,
**dadurch gekennzeichnet, dass**
der Speicher in der Maschine eine Container-Hierarchie (315, 415) speichert, einschließend zumindest einen Container (410, 415, 420) und zumindest ein Objekt (450, 455, 460) in einem von den Containern, nur ein Container (415) repräsentierend eine bestimmte Maschine (430), nur ein Objekt (460) einschließend eine UID-Nummer, welche eine bestimmte Kombination des Nutzer-Namens und der bestimmten Maschine repräsentiert;
der UID-Bestimmer angepasst ist, um eine mit dem Nutzer assoziierte UID-Nummer aus dem nur einen Objekt (460) zu bestimmen, wobei eine designierte Administrator-UID-Nummer als die UID-Nummer verwendet wird, wenn bestimmt wird, dass der Nutzer ein Administrator der Maschine ist.

2. Eine Apparatur nach Anspruch 1, wobei
die Maschine (105, 425, 430, 435) eine Linux^{™} -Maschine ist und die designierte Administrator-UID-Nummer Null ist.

3. Eine Apparatur nach Anspruch 1, wobei der UID-Bestimmer (310) funktionsfähig ist, um die UID-Numzner in dem nur einen Objekt als die mit dem nur einen Objekt (450) assoziierte UID-Nummer zu wählen, wenn der Nutzer nicht ein Administrator der Maschine ist.

4. Eine Apparatur nach Anspruch 1, wobei:
der Nutzer ein Mitglied einer mit der Maschine assoziierten Gruppe ist,
jede Gruppe durch ein Gruppen-Objekt (440, 445) in der Container-Hierarchie repräsentiert ist, nur eine Gruppe (440) einschließend eine Gruppen-Identifikation (GID) - Nummer für eine bestimmte Kombination der Gruppe und der bestimmten Maschine (430); und
die Apparatur außerdem umfasst:
einen Gruppen-Identifikation (GID) -Bestimmer (330), funktionsfähig, um eine GID-Nummer, assoziiert mit dem nur einen Gruppen-Objekt (440) zu bestimmen; und
einen GID-Einsteller (335), funktionsfähig, um eine GID-Nummer auf der Maschine auf die mit dem nur einen Gruppen-Objekt assoziierte GID-Nummer einzustellen.

5. Eine Apparatur nach Anspruch 4, wobei der GID-Bestimmer (330) funktionsfähig ist, um eine bezeichnete Administrator GID -Nummer als die mit dem nur einen Gruppen-Objekt (445) assoziierte GID-Nummer zu wählen, wenn die Gruppe eine Gruppe von Administratoren der Maschine ist.

6. Eine Apparatur nach Anspruch 5, wobei der GID-Bestimmer (330) funktionsfähig ist, um eine GID-Nummer in dem nur einen Gruppen-Objekt (440) als die mit dem nur einen Gruppen-Objekt assoziierte GID-Nummer auszuwählen, wenn die Gruppe nicht eine Gruppe von Administratoren der Maschine ist.

7. Eine Apparatur nach Anspruch 1, außerdem umfassend ein Log (325), den Nutzer-Namen speichernd.

8. Eine Apparatur nach Anspruch 7, wobei das Log (325) den Nutzer-Namen auch speichert, wenn der Nutzer ein Administrator der Maschine ist.

9. Ein Verfahren für das Einloggen eines Nutzers in eine Anwender- oder Server- Maschine (105, 425, 430, 435), angefügt an ein Computer-Netzwerk (110), umfassend:
Empfangen (505) von dem Nutzer einen Nutzer-Namen und ein Passwort, wobei der Nutzer-Name spezifisch für den Nutzer ist;
Zugreifen (510, 515, 520) auf ein Objekt (450, 455, 460) in einer Container-Hierarchie (315), die Container-Hierarchie einschließend nur einen Container (415), repräsentierend eine bestimmte Maschine (430), nur ein Objekt (460), einschließend eine Nutzer-Identifikation (UID) -Nummer, repräsentierend eine bestimmte Kombination des Nutzer-Namens und der bestimmten Maschine;
Bestimmen (525) einer UID-Nummer, assoziiert mit dem nur einen Objekt (460);
Einstellen (530) einer UID-Nummer für den Nutzer auf der Maschine auf die mit dem nur einen Objekt assoziierte UID-Nummer; und
Authentisieren (555, 560) des Passworts für den Nutzer-Namen auf der Maschine unter Verwendung der UID-Nummer.

10. Ein Verfahren nach Anspruch 9, wobei das Bestimmen (525) einer mit dem nur einen Objekt (460) assoziierten UID-Nummer einschließt:
Auswählen einer designierten Administrator-UID-Nummer als die mit dem nur einen Objekt (460) assoziierte UID-Nummer, wenn der Nutzer ein Administrator für die Maschine ist.

11. Ein Verfahren nach Anspruch 10, wobei:
Authentisieren (555, 560) des Passworts das Authentisieren des Passworts für den Nutzer-Namen auf einer Linux^{™}-Maschine einschließt; und
Auswählen einer designierten Administrator-UID-Nummer das Wählen von Null als der mit dem nur einen Objekt (460) assoziierten UID-Nummer einschließt.

12. Ein Verfahren nach Anspruch 9, wobei das Bestimmen einer mit dem nur einen Objekt assoziierten UID-Nummer das Zugreifen auf eine UID-Nummer von dem nur einen Objekt (450) einschließt, wenn der Nutzer nicht ein Administrator der Maschine ist.

13. Ein Verfahren nach Anspruch 9, außerdem umfassend:
Bestimmen (535), dass der Nutzer ein Mitglied einer Gruppe ist, wobei eine bestimmte Kombination der Gruppe und der bestimmten Maschine (430) repräsentiert ist durch nur ein Gruppen-Objekt (440) in der Container-Hierarchie (415);
Bestimmen (545) einer mit dem nur einen Gruppen-Objekt (440) assoziierten Gruppen-Identifikation (GID) -Nummer; und
Einstellen (550) einer GID-Nummer auf der Maschine für den Nutzer auf die mit dem nur einen Gruppen-Objekt assoziierte GID-Nummer.

14. Ein Verfahren nach Anspruch 13, wobei das Bestimmen (545) einer mit nur dem einen Gruppen-Objekt (445) assoziierten GID-Nummer einschließt:
Bestimmen, dass die Gruppe eine Gruppe von Administratoren-Nutzern für die Maschine repräsentiert; und
Auswählen einer designierten Administrator-GID-Nummer als die mit dem nur einen Objekt assoziierte GID-Nummer.

15. Ein Verfahren nach Anspruch 14, wobei
Authentisieren (555, 560) des Passworts das Authentisieren des Passworts für den Nutzer-Namen auf einer Linux^{™}-Maschine einschließt; und
Auswählen einer designierten Administrator-GID-Nummer das Wählen von Null als der mit dem nur einen Gruppen-Objekt (445) assoziierten GID-Nummer einschließt.

16. Ein Verfahren nach Anspruch 9, außerdem umfassend das Loggen (550) des Nutzer-Namens.

17. Ein Verfahren nach Anspruch 16, wobei das Loggen (550) des Nutzer-Namens das Loggen des Nutzer-Namens auch dann einschließt, wenn der Nutzer ein Administrator der Maschine ist.

18. Ein Computer-Programm, welches, wenn es auf dem Computer ausgeführt wird, das Verfahren nach irgendeinem der Ansprüche 9 bis 17 ausführt.

19. Ein Programm nach Anspruch 18, wobei dieses auf einem Maschinen-zugriffsfähigen Medium gespeichert ist.

## Revendications

1. Appareil informatique, comportant :
une machine client ou serveur (105, 425, 430, 435) reliée à un réseau informatique (110) ;
un authentificateur (305) pour authentifier un nom d'utilisateur spécifique à un utilisateur sur la machine en utilisant un numéro d'identification utilisateur (UID), et un mot de passe pour un utilisateur de la machine, afin que l'utilisateur puisse se connecter à la machine ;
une mémoire dans la machine ;
un dispositif de détermination d'identification utilisateur (UID) (310) opérationnel pour déterminer un numéro UID associé audit utilisateur ; et
un dispositif d'établissement UID (320) opérationnel pour établir un numéro UID sur la machine avec ledit numéro UID associé audit utilisateur,
**caractérisé en ce que**
la mémoire dans la machine stocke une hiérarchie de conteneurs (315, 415) incluant au moins un conteneur (415, 415, 420) et au moins un objet (450, 455, 460) dans l'un des conteneurs, un conteneur unique (415) représentant une machine donnée (430), un seul objet (460) incluant un numéro UID représentant une combinaison donnée dudit nom utilisateur et de ladite machine donnée ;
le dispositif de détermination UID est adapté pour déterminer un numéro UID associé audit utilisateur à partir dudit objet unique (460), dans lequel un numéro UID d'administrateur désigné est utilisé en tant que ledit numéro UID s'il est déterminé que l'utilisateur est un administrateur de la machine.

2. Appareil selon la revendication 1, dans lequel
la machine (105, 425, 430, 435) est une machine Linux (nom commercial déposé) ; et
ledit numéro UID d'administrateur désigné est zéro.

3. Appareil selon la revendication 1, dans lequel ledit dispositif de détermination UID (310) est opérationnel pour sélectionner ledit numéro UID dans ledit objet unique en tant que ledit numéro UID associé audit objet unique (450) si ledit utilisateur n'est pas un administrateur de la machine.

4. Appareil selon la revendication 1, dans lequel :
ledit utilisateur est un membre d'un groupe associé à la machine,
chaque groupe étant représenté par un objet de groupe (440, 445) dans la hiérarchie de conteneurs, un objet de groupe unique (440) incluant un numéro d'identification de groupe (GID) pour une combinaison donnée dudit groupe et de ladite machine donnée (430) ; et
l'appareil comporte en outre :
un dispositif de détermination d'identification de groupe (GID) (330) opérationnel pour déterminer un numéro GID associé audit objet de groupe unique (440) ; et
un dispositif d'établissement GID (335) opérationnel pour établir un numéro GID sur la machine pour ledit numéro GID associé audit objet de groupe unique.

5. Appareil selon la revendication 4, dans lequel le dispositif de détermination GID (330) est opérationnel pour sélectionner un numéro GID d'administrateur désigné en tant que ledit numéro GID associé audit objet de groupe unique (445) si ledit groupe est un groupe d'administrateurs de la machine.

6. Appareil selon la revendication 5, dans lequel le dispositif de détermination GID (330) est opérationnel pour sélectionner un numéro GID dans ledit objet de groupe unique (440) en tant que ledit numéro GID associé audit objet de groupe unique si ledit groupe n'est pas un groupe d'administrateurs de la machine.

7. Appareil selon la revendication 1, comportant en outre un journal (325) stockant ledit nom d'utilisateur.

8. Appareil selon la revendication 7, dans lequel le journal (325) stocke ledit nom d'utilisateur même si l'utilisateur est un administrateur de la machine.

9. Procédé pour un utilisateur pour se connecter à une machine client ou serveur (105, 425, 430, 435) reliée à un réseau informatique (110), comportant les étapes de :
recevoir (505) de l'utilisateur un nom d'utilisateur et un mot de passe, le nom d'utilisateur étant spécifique à l'utilisateur ;
accéder (510, 515, 520) à un objet (450, 455, 460) dans une hiérarchie de conteneurs (315), la hiérarchie de conteneurs incluant un conteneur unique (415) représentant une machine donnée (430), un objet unique (460) incluant un numéro d'identification utilisateur (UID) représentant une combinaison donnée dudit nom utilisateur et de ladite machine donnée ;
déterminer (525) un numéro UID associé à l'objet unique (460),
établir (530) un numéro UID sur la machine pour l'utilisateur pour le numéro UID associé à l'objet unique, et
authentifier (555, 560) le mot de passe pour le nom d'utilisateur sur la machine en utilisant le numéro UID.

10. Procédé selon la revendication 9, dans lequel la détermination (525) d'un numéro UID associé à l'objet unique (460) inclut l'étape de :
sélectionner un numéro UID d'administrateur désigné en tant que numéro UID associé à l'objet unique (460) si l'utilisateur est un administrateur pour la machine.

11. Procédé selon la revendication 10, dans lequel :
l'authentification (555, 560) du mot de passe inclut d'authentifier le mot de passe pour le nom d'utilisateur sur une machine Linux (nom commercial déposé) ; et
la sélection d'un numéro UID d'administrateur désigné inclut de sélectionner zéro en tant que numéro UID associé à l'objet unique (460).

12. Procédé selon la revendication 9, dans lequel la détermination d'un numéro UID associé à l'objet unique inclut d'accéder au numéro UID à partir de l'objet unique (450), si l'utilisateur n'est pas un administrateur de la machine.

13. Procédé selon la revendication 9, comportant en outre les étapes de :
déterminer (535) que l'utilisateur est un membre d'un groupe, une combinaison donnée dudit groupe et de ladite machine donnée (430) étant représentée par un objet de groupe unique (400) dans la hiérarchie de conteneurs (415) ;
déterminer (545) un numéro d'identification de groupe GID associé audit objet de groupe unique (400) ; et
établir (550) un numéro GID sur la machine pour l'utilisateur au numéro GID associé audit objet de groupe unique.

14. Procédé selon la revendication 13, dans lequel la détermination (545) d'un numéro GID associé audit objet de groupe unique (445) inclut les étapes de :
déterminer que le groupe représente un groupe d'utilisateurs administrateurs pour la machine ; et
sélectionner un numéro GID d'administrateur désigné en tant que numéro GID associé audit objet unique.

15. Procédé selon la revendication 14, dans lequel :
l'authentification (555, 560) du mot de passe inclut d'authentifier le mot de passe pour le nom d' utilisateur sur une machine Linux (nom commercial déposé) ; et
la sélection d'un numéro GID d'administrateur désigné inclut de sélectionner la valeur zéro en tant que numéro GID associé audit objet de groupe unique (445).

16. Procédé selon la revendication 9, comportant en outre le stockage (550) du nom d'utilisateur.

17. Procédé selon la revendication 16, dans lequel le stockage (550) du nom d'utilisateur inclut de stocker le nom d'utilisateur même si l'utilisateur est un administrateur de la machine.

18. Programme informatique, lequel lors de l'exécution sur un ordinateur met en oeuvre le procédé selon l'une quelconque des revendications 9 à 17.

19. Programme informatique selon la revendication 18, lorsque mémorisé sur un support accessible par machine.
